# EUROPÄISCHE PATENTSCHRIFT

(11) **EP 2 641 005 B1**
(45) Veröffentlichungstag und Bekanntmachung des Hinweises auf die Patenterteilung: **08.10.2014**
(21) Anmeldenummer: 11799230.5
(22) Anmeldetag: 10.11.2011
(51) Int. Cl.: F16L 11/04, F16L 55/165

(54) **AUSKLEIDUNGSSCHLAUCH FÜR DIE KANALSANIERUNG SOWIE VERFAHREN UND ANORDNUNG ZUR HERSTELLUNG EINES SOLCHEN**
LINER FOR SEWER REHABILITATION AND METHOD AND ARRANGEMENT FOR PRODUCING SUCH A LINER
GAINE DE CHEMISAGE POUR LA RÉNOVATION DE CONDUITES, AINSI QUE PROCÉDÉ ET SYSTÈME DE FABRICATION DE LA GAINE

(30) Priorität: 15.11.2010 DE 102010051484
(43) Veröffentlichungstag der Anmeldung: 25.09.2013
(73) Patentinhaber: Brandenburger Patentverwertung GBR, 76829 Landau (DE)
(72) Erfinder: DUTTENHÖFER, Peter, 76831 Ilbesheim (DE)
(74) Vertreter: Kesselhut, Wolf
(86) Internationale Anmeldenummer: PCT/EP2011/005652
(87) Internationale Veröffentlichungsnummer: WO 2012/065698

(56) Entgegenhaltungen:
- EP-A1- 2 141 404
- EP-A2- 0 454 309
- EP-A2- 2 233 816
- DE-A1- 19 924 251
- GB-A- 2 429 505
- US-A1- 2007 113 971
- US-A1- 2010 075 078

## Beschreibung

Die Erfindung betrifft einen Auskleidungsschlauch für die Kanalsanierung sowie ein Verfahren und eine Anordnung zur Herstellung eines solchen gemäß dem Oberbegriff von Anspruch 1, 7 und 11.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Inliner" bezeichnet werden und aus einem Fasermaterial, insbesondere aus Glasfasergewebe bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird. Ein solcher Auskleidungsschlauch sowie ein Verfahren zur Herstellung eines solchen sind beispielsweise aus der WO-A 00/73692 bekannt, wobei der dort beschriebene Auskleidungsschlauch einen Innenfolienschlauch mit einer aufkaschierten Vliesschicht besitzt, auf den die harzgetränkten Faserbänder auf einem Wickeldom überlappend aufgewickelt werden. Da das Zusammenschweißen der mit der Vliesschicht kaschierten Folie sehr schwer möglich ist, schlägt die Schrift vor, die Vliesschicht zur Fertigung des Innenfolienschlauchs im Bereich der Längsränder zu entfernen und die Längsränder anschließend überlappend miteinander zu verbinden. Obgleich die Schrift eine Vorrichtung zum schraubenförmigen Aufwickeln eines mit einer aufkaschierten Vliesschicht versehenen Außenfolienschlauchs zeigt, gibt die Schrift keinen Hinweis auf eine Vorrichtung zur fortlaufenden Erzeugung eines Innenfolienschlauchs, auf dem eine Vliesschicht angeordnet ist, die mit harzgetränkten Faserbändern umwickelt wird.

Weiterhin ist es aus der EP 0 100 029 A1 bekannt, den für einen Auskleidungsschlauch verwendeten Innenfolienschlauch durch Aufbringen einer nicht-thermoplastischen sowie einer darauf angeordneten thermoplastischen Polyurethanharnstoffbeschichtung auf einen bahnförmigen textilen Werkstoff in Form eines Polyestervlieses zu erzeugen und die Längsränder der Folie miteinander zu vernähen. Die Naht wird anschließend durch einen thermisch verschweißbaren oder ggf. auch verklebbaren Folienstreifen abgedichtet. Die Schrift gibt keinen Hinweis darauf, wie das Verbinden der beiden Längsränder des beschichteten textilen Werkstoffs und das Aufbringen des Folienstreifens im Detail erfolgt.

Ein weiterer Auskleidungsschlauch ist aus der GB 2 429 505 bekannt.

Demgemäß ist es eine Aufgabe der vorliegenden Erfindung, einen Auskleidungsschlauch zu schaffen, welcher einen im Endlosverfahren fertigbaren Innenfolienschlauch besitzt, der nach dem Aushärten des Reaktionsharzes über eine aufgebrachte Vlieslage mit der Verstärkungslage unlösbar verbunden ist, und als schützende Innenschicht nach der Fertigstellung des Auskleidungsschlauchs im sanierten Kanal verbleiben kann.

Eine weitere Aufgabe der Erfindung ist es, ein Verfahren und eine Anordnung zu schaffen, mit denen sich ein solcher Auskleidungsschlauch im Endlosverfahren und mit hoher Genauigkeit fertigen lassen.

Diese Aufgaben werden erfindungsgemäß durch die Merkmale von Anspruch 1, 7 und 11 gelöst.

Weitere Merkmale der Erfindung sind in den Unteransprüchen beschrieben.

Gemäß der Erfindung umfasst ein Auskleidungsschlauch zur Sanierung von Kanälen und Abwasserleitungen einen Innenfolienschlauch, der durch Verbinden der Randabschnitte wenigstens einer Folienbahn erzeugt wird, die auf ihrer Außenseite eine Vliesschicht aufweist, auf welch letzterer eine Verstärkungslage angeordnet ist, die ein mit einem lichhärtbaren Reaktionsharz getränktes, insbesondere schraubenförmig gewickeltes Faserband umfasst. Der erfindungsgemäße Auskleidungsschlauch zeichnet sich dadurch aus, dass sich die Vliesschicht in den Randabschnitten bis an die jeweilige Längskante der Folienbahn heran erstreckt, und die Randbereiche der Folienbahn in einem Überlappungsbereich von 0,1 bis 10 mm, insbesondere 0,5 bis 2 mm übereinander geführt sind. Auf der der Vliesschicht gegenüberliegenden Seite der Folienbahn, d.h. auf der Innenseite des fertigen Auskleidungsschlauchs ist erfindungsgemäß ein mit der Folienbahn thermisch verschweißtes Folienband angeordnet ist, welches sich entlang der Längskanten der Folienbahn erstreckt und den Überlappungsbereich überdeckt.

Der erfindungsgemäße Auskleidungsschlauch besitzt den Vorteil, dass die Folienbahn des Innenfolienschlauchs aufgrund der mechanisch hochfesten Verbindung mit der Verstärkungslage eine Schutzlage innerhalb eines sanierten Kanals bildet, die die insbesondere aus glasfaserverstärktem Kunststoffmaterial bestehende Verstärkungslage beim Spülen des sanierten Kanals schützt.

Wie sich in Versuchen gezeigt hat, ergibt sich durch die gegenüber einer Oberfläche aus gehärtetem Reaktionsharz erheblich größere Homogenität und geringere Oberflächenrauhigkeit der die Innenfläche des Auskleidungsschlauchs vollständig auskleidenden Innenfolie insbesondere beim Einsatz einer Folienbahn, die eine Schutzlage aus Polyethylen besitzt, der Vorteil, dass die Oberfläche der Harzschicht nicht lokal abgesprengt wird, wenn der scharfe Wasserstrahl einer Spüllanze auf einen mikroskopischen Krater in der Oberfläche trifft, wie dies bei den Auskleidungsschläuchen des Standes der Technik der Fall ist.

Darüber hinaus ergibt sich der weitere Vorteil, dass das Fließverhalten der Abwässer in einem sanierten Kanal aufgrund der verbesserten Oberflächenhomogenität und verringerten Oberflächenrauhigkeit insgesamt verbessert wird, wodurch sich entsprechend die Gefahr von Verstopfungen und Verkrustungen vermindert.

Schließlich ist es bei dem erfindungsgemäßen Auskleidungsschlauch nicht erforderlich, diesen nach dem Abschluss eines Sanierungsvorgangs in aufwändiger Weise aus dem Kanal zu ziehen, was bei Kanälen mit geringeren Durchmessern mitunter sehr aufwändig sein kann. Ebenso ist es nicht mehr erforderlich, den in der Regel mit Styrol belasteten Innenfolienschlauch im Anschluss daran fachgerecht zu entsorgen, wie dies bei den Auskleidungsschläuchen des Standes der Technik nötig ist.

Bei der bevorzugten Ausführungsform der Erfindung umfasst die Folienbahn bevorzugt eine Verbundfolie mit einer ersten Lage aus Polyethylen oder Polypropylen, einer darauf angeordneten zweiten Lage aus Polyamid und einer darauf angeordneten dritten Lage aus Polyethylen oder Polypropylen, auf welch letztere die Vliesschicht aufgebracht ist. Die Vliesschicht besteht bevorzugt ebenfalls aus einem thermisch verschweißbaren Fasermaterial, insbesondere aus Polyesterfasern oder Polypropylenfasern, und ist bevorzugt auf die Lage aus Polypropylen oder Polyethylen aufkaschiert, d.h. durch thermisches Verschmelzen der Vliesschicht mit der darunter liegenden Lage aus Kunststoffmaterial verbunden.

In gleicher Weise besteht jedoch die Möglichkeit, ein Glasfaservlies zu verwenden, welches mit der in diesem Falle bevorzugt z.B. durch Ätzen angerauhten Folienoberfläche mit einem geeigneten Klebstoff verklebt ist.

Die Verbundfolie besitzt dabei eine Dicke im Bereich von bevorzugt 200 Mikrometern, und die Vliesschicht weist eine Dicke im Bereich von 100 Mikrometern auf. Hierdurch ergib sich eine Innenfolie, die sich thermisch noch gut mit dem Folienband verschweißen lässt, was bevorzugt durch die Vliesschicht und die Folienlage hindurch erfolgt, und die auf der anderen Seite eine auch über einen längeren Zeitraum hinweg ausreichend hohe mechanische Festigkeit bietet. Zudem wird durch die geringe Dicke der Verbundfolie der Vorteil erhalten, dass der Innendurchmesser des Auskleidungs-schlauchs- und damit den Innendurchmesser des sanierten Kanals - trotz der hohen Schutzwirkung nur sehr geringfügig verringert wird.

Nach einem weiteren der Erfindung zugrunde liegenden Gedanken besitzt das Folienband einen Aufbau, der dem Aufbau der Folienbahn entspricht. Die jeweiligen Dicken der einzelnen Lagen des Folienbandes sowie auch die Gesamtdicke des Folienbandes entsprechen dabei bevorzugt denjenigen Dicken der Folienbahn, wodurch sich der Vorteil ergibt, dass das Dehnungsverhalten des Folienbandes bei Temperaturänderungen demjenigen der Folienbahn angepasst ist, wodurch die Gefahr eines Ablösens des Folienbandes von der Folienbahn im Überlappungsbereich infolge von Temperaturschwankungen verringert wird. Ein weiterer Vorteil, der sich durch den im Wesentlichen gleichartigen Aufbau ergibt, besteht darin, dass sich das Folienband mit einer sehr hohen Präzision auf die beiden Randabschnitte der Folienbahn thermisch aufschweißen lässt, ohne dass es aufgrund der sich zwangsweise beim Einbringen der Wärmeenergie durch die Vliesschicht hindurch ergebenden Temperaturdifferenzen zu einer lateralen Verschiebung der Folienschichten relativ zueinander kommt.

Bei einer bevorzugten Ausführungsform der Erfindung wird das Folienband vor dem Übereinanderführen der Randabschnitte an der der Vliesschicht gegenüberliegenden Seite der Folienbahn über eine erste thermische Schweißnaht befestigt. Das thermische Anschweißen des Folienbandes an den ersten Randabschnitt der Folienbahn erfolgt dabei bevorzugt im Vorfeld und nicht im Zusammenhang mit der Fertigung des Auskleidungsschlauchs auf dem Wickeldorn, wodurch die Prozessgeschwindigkeit beim thermischen Schweißen frei gewählt werden kann, und die Ränder von Folienbahn und Folienband durch entsprechende mechanische Einrichtungen wie Längsanschläge mit einer hohen Präzision ausgerichtet werden können. Das Anschweißen des Folienbandes erfolgt dabei bevorzugt vor dem Aufwickeln der Folienbahn auf eine Folienbahnrolle, wobei zum Erzeugen der Schweißnaht eine bekannte thermische Schweißeinrichtung zum Einsatz gelangt, in der die Wärmeenergie von einem Heißluftgebläse durch die Vliesschicht hindurch in die darunter angeordnete Folienbahn, und über diese in die an der Folienbahn anliegende Lage des Folienbandes eingebracht wird. Das Folienband und die Folienbahn werden nach dem Erhitzen oder auch bereits schon während des Erhitzens durch ein Andruckelement, z.B. eine Andruckrolle, gegeneinander gepresst, um nach dem Abkühlen die mechanische Verbindung der Folienlagen zu erhalten.

Nachdem das Folienband über die ersten Schweißnaht, die z.B. eine Breite im Bereich von 1 bis 2 cm besitzen kann, mit dem ersten Randabschnitt der Folienbahn verbunden wurde, wird der in einem festen und wohl definierten Abstand vom ersten Längsrand positionierte freie Abschnitt des Folienbandes auf der der Vliesschicht gegenüberliegenden Seite der Folienbahn über den zweiten Randbereich derselben geführt und das Folienband in diesem Abschnitt thermisch durch eine zweite thermische Schweißnaht mit der glattflächigen Außenseite der Folienbahn, die im fertigen Auskleidungsschlauch die den Abwässern ausgesetzte Innenlage desselben bildet, verbunden. Hierbei ist es von besonderer Bedeutung, dass die Vliesschicht den zweiten Längsrand der Folienbahn im Überlappungsbereich um beispielsweise 1 mm bis 1,5 mm überlappt, da sich dieser überlappende Bereich der Vliesschicht beim Aufbringen der Faserbandlage mit von der Seite her eindringendem flüssigen Reaktionsharz vollsaugt und dadurch eine optische "Brücke" erzeugt, durch die hindurch das UV-Licht beim Aushärten des Reaktionsharzes auf direktem Wege sowie auch von der Seite her als Streulicht in die Faserbandlage eintreten kann, um das Reaktionsharz zu härten.

Wie die Anmelderin in diesem Zusammenhang gefunden hat, ergibt sich durch den erfindungsgemäßen Überlapp der Vliesschicht im Überlappungsbereich in überraschender Weise eine durchaus homogene Aushärtung des Reaktionsharzes auch bei dickeren Faserbandlagen, obgleich das Licht in diesem Bereich eine größere Anzahl von Folienlagen durchdringen muss, bevor es in die Faserbandlage eintritt.

Nach einem weiteren der Erfindung zu Grunde liegenden Gedanken wird bei einem Verfahren zur Herstellung des zuvor beschriebenen Auskleidungsschlauchs ein Faserband, welches mit einem insbesondere durch UV-Licht härtbaren Reaktionsharz getränkt ist, bevorzugt schraubenförmig um einen Innenfolienschlauch gewickelt, der durch Verbinden eines ersten und eines zweiten Randabschnitts einer Folienbahn bevorzugt fortlaufend erzeugt wird. Die Folienbahn ist auf ihrer einen Seite, welche die Außenseite des fertig erzeugten Folienschlauchs bildet, mit einer Vliesschicht versehen, die beispielsweise als Polyestervlies bei der Herstellung der Folienbahn in bekannter Weise auf die Folienbahn aufkaschiert wird.

Das erfindungsgemäße Verfahren zeichnet sich dadurch aus, dass zur Bildung des schlauchförmigen Innenfolienschlauchs die Längskante des ersten Randabschnitts der Folienbahn, die bevorzugt von einer Folienbahnrolle mit einer gewünschten Breite abgerollt wird, entlang einem ersten Längsanschlag bewegt wird. Gleichzeitig wird der zweite Randbereich der Folienbahn parallel zum ersten Längsanschlag in der Weise bewegt, das die Vliesschicht, die vollflächig auf der entsprechenden Seite der Folienbahn angeordnet ist, im ersten Randbereich auf der der Vliesschicht gegenüberliegenden Rückseite des zweiten Randbereichs zu liegen kommt und hierbei die Vliesschicht des ersten Randbereichs auf der Rückseite des zweiten Randbereichs zu liegen kommt und den zweiten Randbereich ausgehend von der Längskante desselben in einem Überlappungsbereich von 0,1 bis 10 mm, insbesondere 0,5 bis 2 mm, überdeckt. Im Anschluss daran wird über die beiden in der zuvor beschriebenen Weise übereinander geführten Randbereiche der Folienbahn ein thermisch verschweißbares Folienband angeordnet, welches den Überlappungsbereich überspannt und den ersten und den zweiten Randabschnitt der Folienbahn mechanisch miteinander über eine erste und zweite Schweißnaht verbindet. Das Aufschweißen des Folienbandes, das beispielsweise eine Breite von 3-5 cm besitzen kann und bevorzugt den gleichen Schichtaufbau wie die Folienbahn aufweist, kann fortlaufend über eine bekannte thermische Schweißeinrichtung erfolgen, die der Wickelvorrichtung zum Aufbringen des Faserbandmaterials vorgeordnet ist und den Innenfolienschlauch in der zuvor beschriebenen Weise fortlaufend mit einer der Vorschubrichtung des Auskleidungsschlauchs entsprechenden Geschwindigkeit erzeugt.

Hierdurch ergibt sich der Vorteil, dass prinzipiell Auskleidungsschläuche mit einer mechanisch fest mit den Faserbändern verbundenen Innenfolienlage aus mechanisch hoch belastbarem Kunststoffmaterial herstellbar sind, die in einer gewünschten, in der Praxis noch handhabbaren Länge von z.B. 300 m, nach ihrer Herstellung durch eine geeignete Schneideeinrichtung vom fortlaufend erzeugten Auskleidungsschlauch abgestochen werden können.

Um hierbei Auskleidungsschläuche mit einem in engen Grenzen vorgegebenen Innendurchmesser zu erhalten und gleichzeitig sicherzustellen, dass der Überlapp der Vliesschicht im Überlappungsbereich innerhalb einer vorgegebenen Toleranz von z.B. 0,1 bis 0,3 mm liegt, wird bei der bevorzugten Ausführungsform des Verfahrens der erste Randabschnitt entlang einem insbesondere wellenförmigen flächigen Führungsabschnitt bewegt, an dem der erste Längsanschlag angeordnet ist. Der zweite Randabschnitt, das heißt genaugenommen die Längskante des zweiten Randabschnitts, wird in entsprechender Weise entlang einem wellenförmigen zweiten flächigen Führungsabschnitt bewegt, an dem ein sich parallel zum ersten Längsanschlag erstreckender zweiter Längsanschlag angeordnet ist, entlang von welchem die Längskante des zweiten Randabschnitts geführt wird.

Durch die wellenförmige Ausgestaltung der Führungsabschnitte ergibt sich hierbei in erfindungsgemäßer Weise eine Vergrößerung des Flächenträgheitsmoments des Folienmaterials und dadurch eine räumliche Stabilisierung des ersten und zweiten Längsabschnitts, welche es erlaubt, die Längskanten der beiden Randabschnitte mit einer sonst nicht erreichbaren Präzision relativ zueinander zu positionieren, bevor diese übereinander geführt und durch das thermisch aufgeschweißte oder in sonstiger Weise z.B. mittels Klebstoff befestigte Folienband miteinander verbunden werden.

Um hierbei den ersten und zweiten Längsabschnitt der Folienbahn entlang dem jeweiligen wellenförmigen Führungsabschnitt zu fördern, ist jedem der beiden Führungsabschnitte wenigstens eine Transportwalze zugeordnet, die bevorzugt angetrieben ist und in vorteilhafter Weise die Randabschnitte auf der Seite der jeweiligen Vliesschicht kontaktiert und gegen den jeweiligen Führungsabschnitt drückt. Die Transportwalze kann hierzu federbelastet sein, und/oder eine gummierte Walze sein. Weiterhin ist es von Vorteil, wenn die Walze in einem bevorzugt variablen Winkel von z.B. 10 bis 30 ° in Querrichtung zur Vorschubrichtung des Auskleidungsschlauchs in der Weise angeordnet ist, dass der jeweilige Randabschnitt, bzw. dessen Längsrand in Richtung zum zugehörigen Längsanschlag gefördert wird, so dass die Längskante des ersten bzw. zweiten Längsabschnitts während Ihrer Bewegung über den wellenförmigen flächigen Führungsabschnitt gegen den Längsanschlag gedrängt wird und hierdurch die Längsabschnitte präzise relativ zueinander ausgerichtet werden.

Um das Folienband mit der der Vliesschicht gegenüberliegenden Seite der Folienbahn - die nachfolgend der Einfachheit halber als Rückseite bezeichnet wird - zu verbinden, kann es vorgesehen sein, das das Folienband bereits vorab thermisch mit dem ersten Randabschnitt verschweißt und anschließend zusammen mit der ersten Folienbahn auf eine entsprechende Vorratsrolle aufgerollt wird. Der freie Abschnitt des Folienbandes, der bei dieser Ausführungsform der Erfindung über die Längskante des ersten Randabschnitts der Folienbahn hinausragt, wird zum Verbinden der Randabschnitte in der zuvor beschriebenen Weise entlang dem ersten flächigen wellenförmigen Führungsabschnitts geführt und liegt mit seinem Längsrand an dem entsprechenden Längsanschlag des ersten Führungsabschnitts an. Die Führungsabschnitte sind in diesem Falle um die Breite des freien Abschnitts zuzüglich der Breite des Überlappungsbereichs zueinander versetzt.

Um den freien Abschnitt des Folienbandes nach dem Übereinanderführen der beiden Längsränder der Randabschnitte mit dem zuvor in Längsrichtung ausgerichteten zweiten Randabschnitt der Folienbahn zu verbinden, wird die Folienbahn z.B. von der Seite der Vliesschicht her im Bereich des zweiten Randabschnitts der Folienbahn insbesondere mit Heißluft aus einer bekannten Heißluftdüse beaufschlagt und der zweite Randabschnitt und der an diesem anliegende freie Abschnitt des thermisch verschweißbaren Folienbandes z.B. durch geeignete Andruckrollen gegeneinander gepresst.

Alternativ besteht die Möglichkeit, den ersten und/oder den zweiten wellenförmigen flächigen Führungsabschnitt zumindest abschnittsweise aus Metall zu fertigen und insbesondere von außen her, das heißt von der Seite der Vliesschicht aus, durch geeignete Spulen induktiv zu erwärmen, so dass aufgrund des Kontakts zwischen dem Führungsabschnitt und der Folienbahn bzw. dem freien Abschnitt des Folienbandes am ersten Längsabschnitt eine Erwärmung desselben eintritt, die zum Anschmelzen des thermisch verschweißbaren Kunststoffmaterials des Folienbandes führt. Der in dieser Weise zuvor erwärmte Abschnitt des Folienbandes, bzw. des zweiten Randabschnitts der Folienbahn werden dann in der zuvor beschriebenen Weise z.B. durch Andruckwalzen gegeneinander gedrückt. Alternativ besteht die Möglichkeit, anstelle von Andruckwalzen Blasdüsen oder stationäre Leitbleche einzusetzen, welch letztere z.B. mit einer reibungsvermindernden Beschichtung wie z.B. Teflon beschichtet sein können und/oder mit Luftaustrittsöffnungen besetzt sind, welche die Folienabschnitte über ein auf diese wirkendes Luftpolster, insbesondere ein Heißluftpolster, gegeneinander drängen.

Alternativ kann es vorgesehen sein, dass das thermisch verschweißbare Folienband von einer auf der Rückseite der Folienbahn angeordneten Vorratsrolle abgerollt und nach dem Ausrichten der beiden Randabschnitte der Folienbahn mit Hilfe der wellenförmigen Führungsabschnitte unmittelbar am Ende der Führungsabschnitte zugeführt wird, nachdem die beiden Randabschnitte der Folienbahn über entsprechende Formeinrichtungen, beispielsweise über Formschultern, in die gewünschte Schlauchform überführt wurden.

In gleicher Weise kann die Heißluftdüse oder die sonstige Heizeinrichtung auch auf der Innenseite der zu einem Schlauch geformten Folienbahn stromabwärts oder auch im Bereich der wellenlinienförmigen flächigen Führungsabschnitte angeordnet sein, so dass die beiden Randabschnitte der Folienbahn von innen her während ihrer Führung entlang der flächigen Führungsabschnitte bis auf die Schmelztemperatur des Folienbandes erwärmt werden. Das Folienband, das in diesem Fall ebenfalls von einer Rolle abgerollt wird, wird entsprechend auch bei dieser Ausführungsform von innen her unmittelbar stromabwärts der flächigen Führungsabschnitte über den Überlappungsbereich der Längsabschnitte der Folienbahn geführt und durch geeignete Andruckeinrichtungen mit der erhitzten Rückseite der Folienbahn in Kontakt gebracht.

Bei den zuvor beschriebenen Ausführungsformen der Erfindung wird die Folienbahn bevorzugt von einer insbesondere gebremsten Folienbahnrolle abgezogen und über eine Formschulter gezogen, die dem Wickeldorn vorgeordnet ist. Die Formschulter lenkt die Folienbahn zumindest im Bereich der Randabschnitte um und überführt die Folienbahn in eine Schlauchform. Bei Auskleidungsschläuchen mit einem Durchmesser von z.B. mehr als ca. 70 cm, werden bevorzugt anstelle einer einzelnen Folienbahn zwei oder auch mehrere schmalere Folienbahnen in der zuvor beschriebenen Weise an ihren Längsrändern miteinander verbunden, um den Innenfolienschlauch des Auskleidungsschlauchs zu formen. Hierbei kann z.B. im Falle von zwei Folienbahnen eine Formschulter auf der Oberseite und eine Formschulter auf der Unterseite eines den Wickeldorn tragenden Halterohres angeordnet sein, welches selbst in entsprechenden jochartig ausgestalteten Böcken stromaufwärts des Wickeldorns gehalten wird, um den Wickedorn fliegend zu halten. Bei dieser Ausführungsform der Erfindung sind die Verbindungsstationen mit den jeweiligen flächigen Führungsabschnitten bevorzugt seitlich des Halterohres angeordnet. Hierdurch ergibt sich der Vorteil, dass sich die Folienbahnen aufgrund der reduzierten Bahnbreite leichter handhaben lassen.

Gemäß einem weiteren der Erfindung zugrunde liegenden Gedanken umfasst eine Anordnung zur Durchführung des zuvor beschriebenen Verfahrens eine Abrollvorrichtung für eine eine Vliesschicht aufweisende Folienbahn, eine Verbindungsstation zum Verbinden eines ersten und zweiten Längsabschnitts der Folienbahn, einen Wickeldorn, über welchen die zu einem Innenfolienschlauch geformte Folienbahn gefördert wird sowie eine Wickeleinrichtung, in welcher ein harzgetränktes Faserband überlappend um den Wickeldorn herumgeführt wird.

Die erfindungsgemäße Anordnung zeichnet sich dadurch aus, dass die Verbindungsstation wenigstens einen ersten Längsanschlag und einen zweiten Längsanschlag umfasst, entlang von welchen die Längskante des ersten und zweiten Randabschnitts der Folienbahn bewegt werden. Der zweite Längsanschlag befindet sich dabei in einem solchen Abstand entfernt vom ersten Längsanschlag und ist parallel zu diesem angeordnet, dass sich die Ränder der Folie auf der die Vliesschicht aufweisenden Seite in einem Überlappungsbereich von 0,1 bis 10 mm, insbesondere 0,5 bis 2 mm überdecken. Die erfindungsgemäße Anordnung weist weiterhin eine zuvor bereits erwähnte Verbindungsstation auf, die eine dem Überlappungsbereich zugeordnete thermische Schweißeinrichtung umfasst, welche das entlang des Überlappungsbereichs bewegte thermisch verschweißbare Folienband auf der der Vliesschicht gegenüberliegenden Rückseite der Folienbahn unter Zufuhr von Wärme mit der Folienbahn verbindet.

Die Erfindung wird nachfolgend mit Bezug auf die Zeichnungen anhand von bevorzugten Ausführungsformen beschrieben.

In den Zeichnungen zeigen:
- Fig. 1: eine schematische Querschnittsansicht des Auskleidungsschlauchs im Überlappungsbereich,
- Fig. 2: eine schematische räumliche Darstellung einer ersten Ausführungsform der erfindungsgemäßen Anordnung zur Herstellung eines erfindungsgemäßen Auskleidungsschlauchs mit einem abgebrochen angedeuteten Auskleidungsschlauch, der durch Verschweißen von zwei Folienbahnen erhalten wird,
- Fig. 3: eine schematische Seitenansicht einer weiteren Ausführungsform der erfindungsgemäßen Anordnung ohne Auskleidungsschlauch und Gestell zur Aufnahme der Faserbandrollen,
- Fig. 4: eine Querschnittsansicht des ersten und zweiten Längsanschlags der Verbindungsstation, entlang von welchen die Längskanten der Randabschnitte der Folienbahn bewegt werden, und
- Fig. 5: eine schematische räumliche Darstellung des Verbindungsstation.

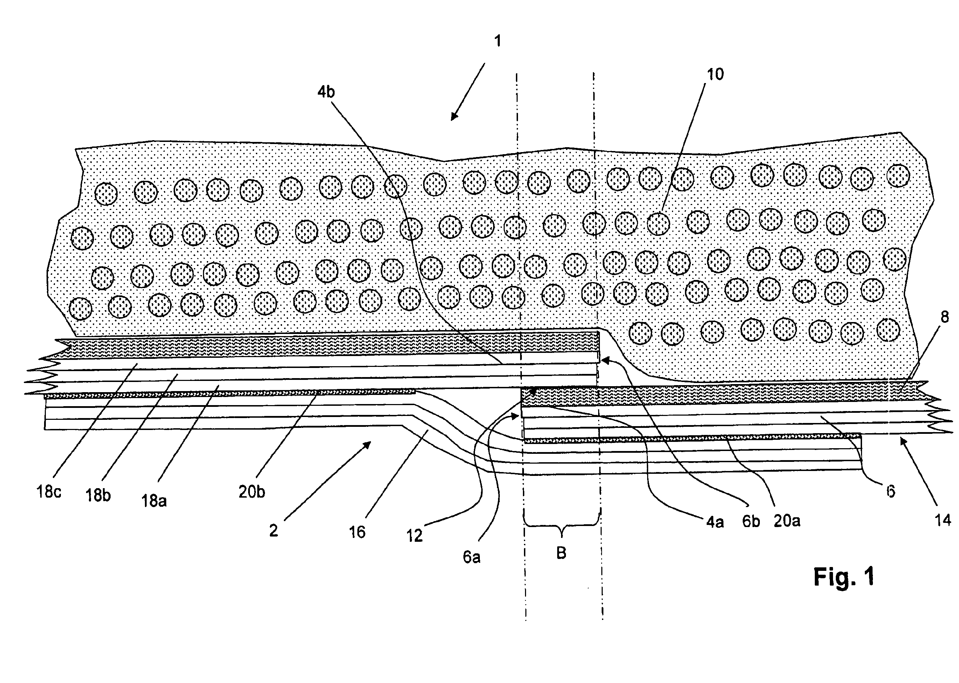

Wie in der Darstellung von Fig. 1 gezeigt ist, umfasst ein Auskleidungsschlauch 1 zur Sanierung von nicht näher gezeigten Kanälen und Abwasserleitungen einen Innenfolienschlauch 2, der durch Verbinden der Randabschnitte 4a und 4b einer Folienbahn 6 erzeugt wird, die auf ihrer Außenseite mit einer insbesondere aufkaschierten Vliesschicht 8 versehen ist. Auf der Vliesschicht 8, die die Außenseite des Innenfolienschlauchs 2 im fertigen Auskleidungsschlauchs bildet, ist eine Verstärkungslage angeordnet, die beispielsweise aus einem Glasfasergelege besteht, das mit einem lichhärtbaren Reaktionsharz, wie insbesondere einem Polyesterharz, getränkt ist. Das Glasfasergelege wird mit dem Reaktionsharz vorimprägniert und anschließend als Faserband 10 schraubenförmig um den zuvor im Endlosverfahren gefertigten Innenfolienschlauch 2 herum gewickelt. Die Vliesschicht 8 bedeckt die gesamte Oberfläche der Folienbahn 6 und erstreckt sich in den Randabschnitten 4a, 4b bis an die jeweilige erste und zweite Längskante 6a, 6b der Folienbahn heran.

Wie der Darstellung von Fig. 1 dabei im Detail entnommen werden kann, ist der erste Randabschnitt 4a der Folienbahn 6 in einem Überlappungsbereich 12, der eine Breite B von 0,1 bis 10 mm, insbesondere 0,5 bis 2 mm besitzt, über die Rückseite 14 des zweiten Randbereichs 4b geführt, so dass die Vliesschicht 8 entlang einem streifenförmigen Abschnitt, der eine dem Überlappungsbereich 12 entsprechende Breite besitzt, auf der aus einem mechanisch hoch belastbaren Kunststoffmaterial, wie insbesondere Polyethylen, bestehenden Rückseite 14 der Folienbahn 6 anliegt. Auf der der Vliesschicht 8 gegenüberliegenden Rückseite 14 der Folienbahn 6 ist ein mit der Folienbahn thermisch verschweißtes Folienband 16 angeordnet ist, welches sich entlang der ersten Längskante 6a und der zweiten Längskante 6b der Folienbahn 6 erstreckt und den Überlappungsbereich 12 überspannt, um die beiden Randabschnitte 4a und 4b zur Erzeugung des Innenfolienschlauchs 2 mechanisch miteinander zu verbinden und den Innenraum des Innenfolienschlauchs 2 luft- und flüssigkeitsdicht gegenüber der Außenseite abzudichten.

Wie der Darstellung von Fig. 1 weiterhin entnommen werden kann, besteht die Folienbahn 6 in vorteilhafter Weise aus einer Verbundfolie, die eine erste Lage 18a aus Polyethylen oder Polypropylen, eine darauf angeordneten zweite Lage 18b aus Polyamid und eine auf dieser zweiten Lage 18b angeordnete dritte Lage 18c aus Polyethylen oder Polypropylen umfasst, auf welch letzter dann die bevorzugt aus Polyesterfasern bestehende Vliesschicht 8 angeordnet ist, die bereits bei der Herstellung der Verbundfolie bevorzugt auf diese aufkaschiert, d.h. unter Anwendung von Wärme, aufgebracht wird.

Die Verbundfolie wird nach ihrer Herstellung bevorzugt zu Bahnen mit einer Breite von z.B. 2,5m aufgerollt und in dieser Form zur Herstellung des Auskleidungsschlauchs 1 bereit gestellt. Die Folie besitzt eine Dicke im Bereich von insbesondere 200 Mikrometern, wobei die Dicke der Vliesschicht demgegenüber im Bereich von 100 Mikrometern liegt, was für eine gute mechanische Verbindung zwischen Folie und Verstärkungslage ausreichend ist und lediglich zu einer geringen Abschwächung des durch die Folie in das Reaktionsharz eindringenden UV-Strahlung führt.

Das Folienband 16 besitzt bevorzugt ebenfalls einen Aufbau, der - mit Ausnahme der Vlieslage - im Wesentlichen dem Aufbau der Verbundfolie entspricht, und weist eine der Dicke der Folienbahn entsprechende Dicke auf.

Um die Handhabung von Folienband 16 und Folienbahn 6 zu vereinfachen, wird das Folienband 16 bereits vor dem Übereinanderführen der Randabschnitte 4a, 4b der Folienbahn 6 an einem der beiden Randabschnitte 4a, 4b durch thermisches Verschweißen befestigt, wobei sich die dabei entstehende - nachfolgend als erste Schweißnaht 20a bezeichnete Schweißverbindung der Kunststoffmaterialien - bis an die zugehörige erste Längskante 6a der Folienbahn heran erstreckt.

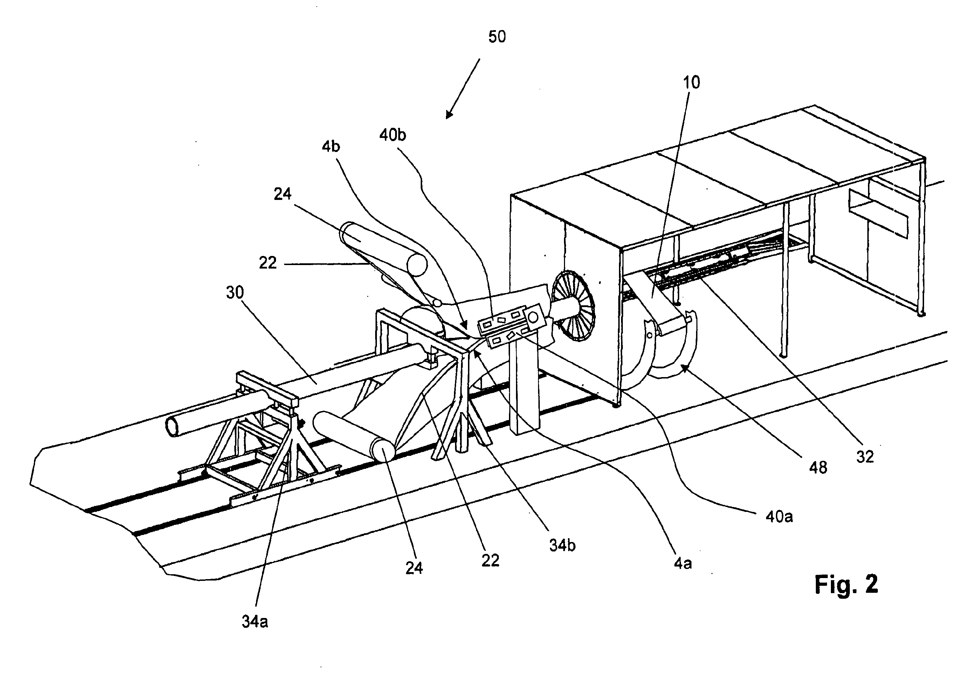

Nach dem Anschweißen des Folienbandes 16 an einen der beiden Randabschnitte - z.B. an den ersten Randabschnitt 4a - der Folienbahn 6, erstreckt sich der freie Abschnitt 22 seitlich von der Folienbahn 6 weg und wird zusammen mit dieser bevorzugt wieder auf eine Vorratsrolle 24 aufgerollt, wie sie in Fig. 2 angedeutet ist. Zum Verbinden der beiden Randabschnitte 4a, 4b wird die Folienbahn 6 mit dem halbseitig angeschweißten Folienband 16 von der Vorratsrolle 24 abgerollt oder über Umlenkwalzen der erfindungsgemäßen Anordnung 50 zugeführt. In dieser wird der die erste Schweißnaht 29a überragende freie Abschnitt 22 des Folienbandes 16 nach dem Übereinanderführen der Randbereiche 4a, 4b durch eine zweite thermische Schweißnaht 20b mit der Rückseite 14 des zweiten Randabschnitts 4b der Folienbahn 6 verbunden, wie dies in Fig. 1 angedeutet ist.

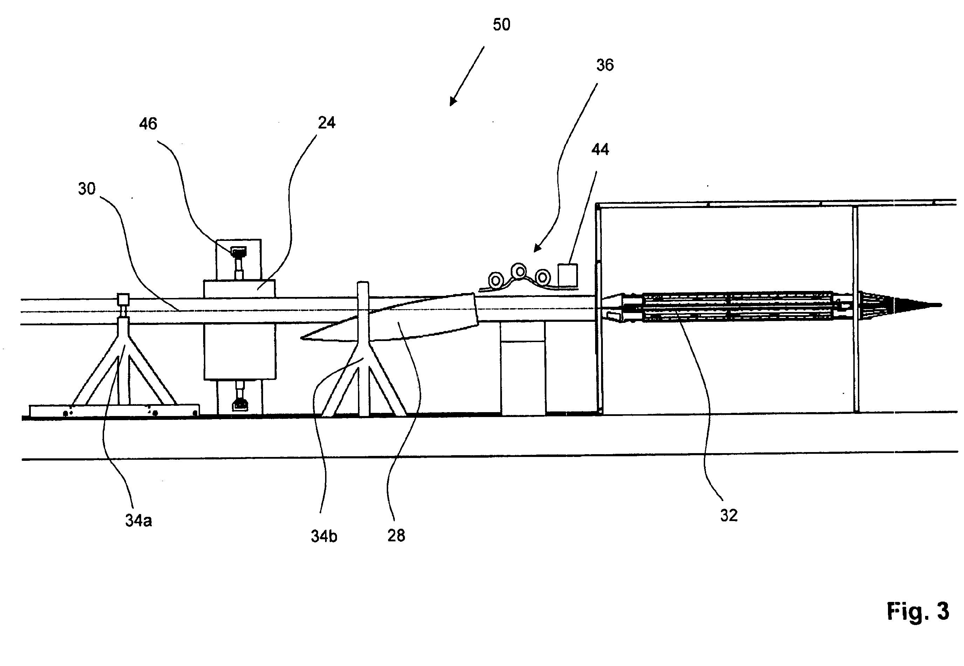

Gemäß der Darstellung von Fig. 2 und 3 erfolgt das Verbinden der Randabschnitte 4a und 4b sowie die anschließende Fertigung des Auskleidungsschlauchs 1 bevorzugt in einer Anordnung 50, die nachfolgend mit Bezug auf die Figuren 2 bis 5 näher beschrieben wird.

Wie in Fig. 2 und 3 angedeutet ist, wird die Folienbahn 6 zusammen mit dem halbseitig daran angeschweißten Folienband 16 von der Vorratsrolle 24, bzw. bei Auskleidungsschläuchen 1 mit einem großen Durchmesser, von zwei getrennten Vorratsrollen 24 abgerollt und einer oberen und einer in Fig. 2 nicht gezeigten unteren Formschulter 28 zugeführt, die die Folienbahn 6 in eine Schlauchform überführen, so dass die entsprechenden Randabschnitte 4a, 4b der Folienbahn 6 aufeinander zu bewegt werden. Obgleich bei der Anordnung von Fig. 2 genau genommen die Randabschnitte zweier unterschiedlicher Folienbahnen miteinander verbunden werden, wird zum leichteren sprachlichen Verständnis jedoch nachfolgend nur von den Randabschnitten einer Folienbahn gesprochen, wie sie in Fig. 3 gezeigt ist. Es versteht sich, dass die diesbezüglichen Ausführungen auch für drei oder mehr Folienbahnen entsprechend gelten, sofern eine solche Anzahl von Folienbahnen bei der Herstellung von Auskleidungsschläuchen mit sehr großen Durchmessern erforderlich sein sollten.

Wie der Darstellung von Fig. 2 in diesem Zusammenhang entnommen werden kann, sind die Formschultern 28 auf der Ober- und Unterseite eines einen Wickeldorn 32 tragenden Halterohres 30 angeordnet, welches selbst in Böcken 34a, 34b stromaufwärts des Wickeldorns 32 eingespannt ist, um den Wickedorn fliegend zu halten. Der dem Wickeldorn 32 zugewandte Bock 34b besitzt dabei die Form eines oberhalb des Halterohres 30 verlaufenden Jochs, welches es ermöglicht, die untere Folienbahn 6 zwischen der Unterseite des Halterohres 30 und den seitlichen Ständern des Bocks 34b hindurch zu führen, wie dies in Fig. 2 gezeigt ist. Obgleich auch die untere Folienbahn bevorzugt über eine z.B. in Fig. 3 gezeigte untere Formschulter 28 geleitet werden kann, bevor sie in eine seitlich vom Halterohr 30 angeordnete Verbindungsstation 36 einläuft, besteht ebenfalls die Möglichkeit, dass die untere Folienbahn 6 der Verbindungsstation 36 sackartig nach unten hängend zugeführt wird. In der Verbindungsstation 36, die in den Figuren 3 bis 5 im Detail gezeigt ist, werden der erste Randabschnitt 4a mit dem daran bereits befestigten Folienband 16 und der zweite Randabschnitt 4b ergriffen und in Richtung zum Wickeldorn 32 hin weiter transportiert.

Gemäß der Darstellung von Fig. 3 bis 5 weist die Verbindungsstation 36 wenigstens einen ersten Längsanschlag 38a auf, entlang von welchem die Längskante 6a des ersten Randabschnitts 4a der Folienbahn 6 bewegt wird. Die Verbindungsstation 36 umfasst weiterhin einen zweiten Längsanschlag 38b, entlang von welchem der zweite Randabschnitt 4b der Folienbahn 6 geführt wird, und der in einem solchen Abstand A entfernt vom ersten Längsanschlag 38a und parallel zu diesem angeordnet ist, dass sich die erste und zweite Längskante 6a, 6b, d.h. die Ränder der Folienbahn 6 auf der die Vliesschicht 8 aufweisenden Seite in einem Überlappungsbereich 12 mit einer Breite B von 0,1 bis 10 mm, insbesondere 0,5 bis 2 mm überdecken. Der Abstand A entspricht bei der in Fig. 2 gezeigten Ausführungsform der Erfindung, bei der das Folienband 16 bereits vorab an den ersten Randabschnitt 4a der Folienbahn 16 angeschweißt ist, im Wesentlichen der Breite des freien Abschnitts 22 zuzüglich der Breite B des Überlappungsbereichs 12.

Wie insbesondere der Darstellung der Figuren 3 bis 5 entnommen werden kann, umfasst die Verbindungsstation 36 einen ersten flächigen Führungsabschnitt 40a, über welchen der erste Randabschnitt 4a der Folienbahn 6 bewegt wird. Am ersten Führungsabschnitt 40a ist ein sich entlang desselben erstreckender erster Längsanschlag 38a geformt, an welchem die entsprechende Längskante des freien Abschnitts 22 entlang gleitet, wenn der erste Randabschnitt 4a der Folienbahn 6 über den flächigen Führungsabschnitt 40a bewegt wird. Sofern das Folienband 16 nicht bereits vor dem Abrollen der Vorratsrolle 24 an der Folienbahn befestigt wurde, sondern erst nach dem Übereinanderführen der Längsabschnitte 4a, 4b mit diesen verbunden wird, wird die erste Längskante 6a der Folienbahn 6 selbst unmittelbar entlang dem ersten Längsanschlag 38a geführt.

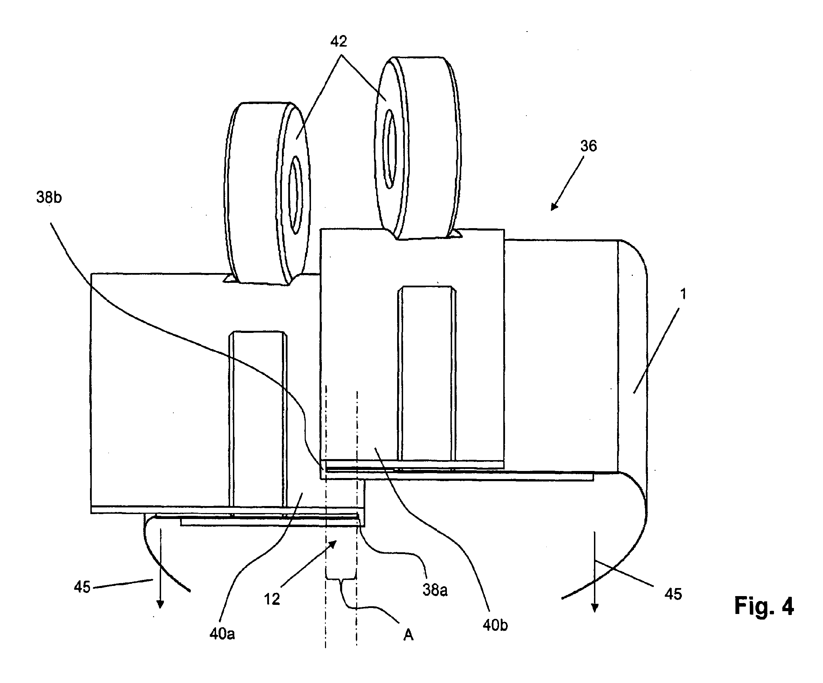

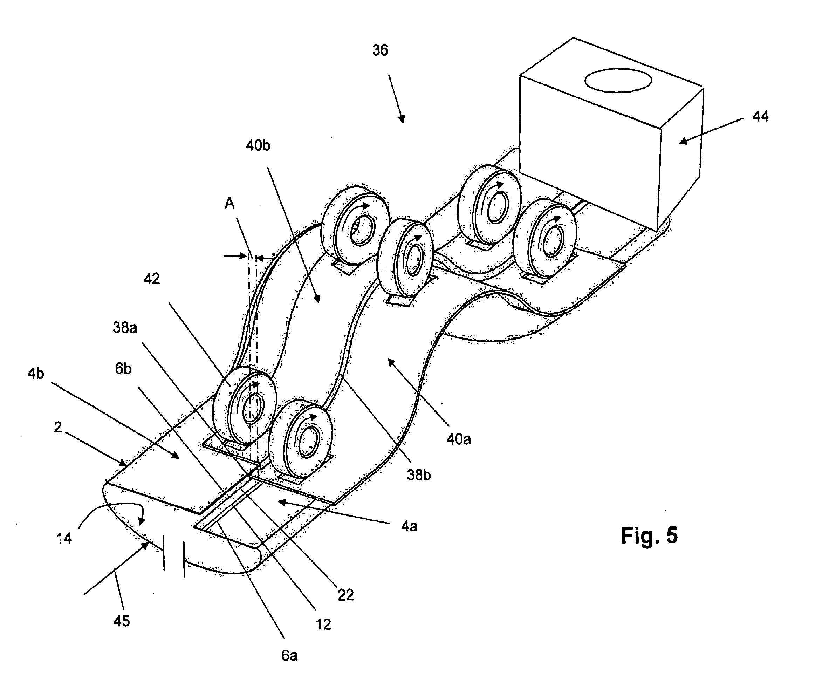

Die Verbindungsstation 36 umfasst weiterhin einen zweiten flächigen Führungsabschnitt 40b, über welchen der zweite Randabschnitt 4b der Folienbahn 6 bewegt wird. Dem zweiten Führungsabschnitt 40b ist ein sich entlang desselben erstreckender zweiter Längsanschlag 38a zugeordnet, an welchem die entsprechende Längskante 6b der Folienbahn 6 unmittelbar entlang geführt wird, wenn der zweite Längsabschnitt 4b in Vorschubrichtung der Folienbahn 6 über den zweiten Führungsabschnitt 40b bewegt wird. Wie hierbei der Darstellung der Figuren 4 und 5 entnommen werden kann, sind der erste und zweite Führungsabschnitt in voneinander beabstandeten Ebenen angeordnet, die in Richtung zum Wickeldom 32 hin am Ende der Führungsabschnitte 40a, 40b aufeinander zu laufen, so dass der erste und zweite Führungsabschnitt 4a und 4b nach ihrer Ausrichtung an den jeweiligen Längsanschlägen 38a, 38b aufeinander zu geführt werden. Der Vorschub und die Ausrichtung der beiden Randabschnitte auf den zugehörigen Führungsabschnitten 40a, 40 erfolgt bevorzugt durch angetriebene und/oder nicht angetriebene Transportwalzen oder Führungsrollen 42, von denen z.B. jeweils drei Walzen über einen Führungsabschnitt 40 verteilt angeordnet sind. Von diesen drei Transportwalzen 42 ist bevorzugt die mittlere Walze in der durch den Pfeil 45 angedeuteten Bewegungsrichtung der Folienbahn 6 im Winkel auf den jeweiligen Längsanschlag 38a, 38b zu geneigt angeordnet, um den jeweiligen ersten, bzw. zweiten Randabschnitt 4a, 4b in Richtung zum zugehörigen ersten oder zweiten Längsanschlag 38a, 38b hin zu fördern.

Wie der Darstellung von Fig. 5 im Detail entnommen werden kann, sind der erste und zweite flächige Führungsabschnitt 40a, 40b bevorzugt wellenlienienartig ausgebildet, um die Längsabschnitte 4a, 4b während der Bewegung entlang der Längsanschläge 38a, 38b der Folienbahn 6 zu korrugieren und dadurch zu stabilisieren. Hierdurch ergibt sich die Möglichkeit einer höchst präzisen Ausrichtung der Längskanten 6a, 6b der Folienbahn 6, die während der fortlaufenden Fertigung des Innenfolienschlauchs 2 eine im Wesentlichen konstante Breite B des Überlappungsbereichs 12 gewährleistet.

Wie in der Darstellung von Fig. 2 und 5 schematisch angedeutet ist, umfasst die Verbindungsstation 36 weiterhin eine thermische Schweißeinrichtung 44, die stromabwärts der Führungsabschnitte 40a, 40b in Höhe des Überlappungsbereichs 12 angeordnet ist und die bevorzugt eine nicht näher gezeigte Heißluftdüse aufweist, die den Überlappungsbereich 12, bzw. den Bereich der Längsabschnitte 4a, 4b mit Heißluft beaufschlagt. Die Heißluft besitzt eine Temperatur, die hoch genug ist, um das Material der ersten Lage 18a der Folienbahn 6 sowie auch die die erste Lage 18a der Folienbahn 6 kontaktierende Lage des Folienbandes 16 anzuschmelzen. Die Temperatur liegt jedoch unterhalb des Schmelzpunktes der zweiten Lage 18b der Verbundfolie, welche bevorzugt aus Polyamid oder Polyethylen besteht. Durch die zuvor beschriebene Wahl der Temperatur der Heißluft ist es erfindungsgemäß mögliche, die erste Lage 18a der Verbundfolie der Folienbahn 6 von außen her durch die Vliesschicht hindurch anzuschmelzen, die ebenfalls einen oberhalb der Heißlufttemperatur liegenden Schmelzpunkt besitzt und z.B. aus Polyester oder auch aus Glasfasern besteht. Die Temperatur der Heißluft ist bevorzugt entsprechend der Dicke der Folien und der verwendeten Materialien veränderbar und liegt z.B. im Bereich von 350 bis 600 Grad Celsius.

Um die in den Führungsabschnitten 40a, 40b übereinander geführten Randabschnitte 4a, 4b mit dem Folienband 16 zu verschweißen, werden beim Einsatz eines bereits vorab an den ersten Randabschnitt 4a angeschweißten Folienbandes 16 bevorzugt nur der freie Abschnitt 22 des Folienbandes 16 und der zweite Randabschnitt 4b nach dem Erhitzen in Anlage gebracht, und diese durch die thermische Schweißeinrichtung 44 über eine entsprechende zweite thermische Schweißnaht 20b großflächig miteinander verbunden.

Nach dem Verbinden der beiden Randabschnitte in der Verbindungsstation 36 wird der in der zuvor beschriebenen Weise fortlaufend erzeugte Innenfolienschlauch 2 einer bekannten, in Fig. 2 angedeuteten Wickeleinrichtung 48 zugeführt, wie sie z.B. aus der Eingangs genannten WO-A 00/73692 bekannt ist, in der die Verstärkungslage durch schraubenförmiges Wickeln von einem oder mehreren Faserbändern 10 um den Innenfolienschlauch 2 herum auf der Vliesschicht 8 angeordnet wird. Dabei dringt das in den mit Reaktionsharz getränkten Faserbändern 10 enthaltene flüssige Reaktionsharz nicht nur großflächig in die Vliesschicht 8 sondern insbesondere auch in den Überlappungsbereich 12 ein, in dem es eine optische Brücke erzeugt, über welche das UV-Licht beim Aushärten des mit Hilfe von Druckluft aufgestellten Auskleidungsschlauchs in einem zu sanierenden Kanal im Überlappungsbereich 12 in die Verstärkungslage 10 eindringt. Hierdurch wird das Reaktionsharz über den gesamten Umfang des Auskleidungsschlauchs 1 hinweg homogen ausgehärtet und erzeugt eine mechanisch hochfeste Verbindung der Vliesschicht 8 und der Verstärkungslage 10.

Bei der in Fig. 3 gezeigten Ausführungsform der erfindungsgemäßen Anordnung 50 wird lediglich eine einzelne Vorratsrolle 24 zur fortlaufenden Erzeugung des Innenfolienschlauchs 2 eingesetzt, welche die Folienbahn 6 in einer vertikal verlaufenden Ebene einer das Halterohr 30 umgebenden Formschulter 28 zuführt, der lediglich eine oberhalb des Halterohres angeordnete Verbindungsstation 36 nachgeordnet ist, in der die Randabschnitte einer nicht gezeigten Folienbahn 6 in der zuvor beschriebenen Weise miteinander verbunden werden. Die Vorratsrolle 24, die alternativ auch horizontal angeordnet sein kann, kann dabei eine Bremseinrichtung 44 aufweisen, um die Folienbahn 6 mit einer gewünschten Zugspannung zu beaufschlagen. Der Innenfolienschlauch 2 und die Wickeleinrichtung zum Aufbringen der Verstärkungslage sind in Fig. 3 der Übersichtlichkeit halber nicht mit dargestellt.

### Bezugszeichenliste

- 1: Anordnung
- 2: Innenfolienschlauch
- 4a: erster Randabschnitt
- 4b: zweiter Randabschnitt
- 6: Folienbahn
- 6a: erste Längskante der Folienbahn
- 6b: zweite Längskante der Folienbahn
- 8: Vliesschicht
- 10: Verstärkungslage
- 12: Überlappungsbereich
- 14: Rückseite der Folienbahn
- 16: Folienband
- 18a: erste Lage der Verbundfolie
- 18b: zweite Lage der Verbundfolie
- 18c: dritte Lage der Verbundfolie
- 20a: erste Schweißnaht
- 20b: zweite Schweißnaht
- 22: freier Abschnitt des einseitig an der Folienbahn befestigten Folienbandes
- 24: Vorratsrolle
- 28: Formschulter
- 30: Halterohres
- 32: Wickeldorn
- 34a: Bock
- 34b: Bock nahe Wickeldorn
- 36: Verbindungsstation
- 38a: erster Längsanschlag
- 38b: zweiter Längsanschlag
- 40a: erster Führungsabschnitt
- 40b: zweiten Führungsabschnitt
- 42: Transportwalze
- 44: thermische Schweißeinrichtung
- 45: Bewegungsrichtung der Folienbahn
- 46: Bremseinrichtung
- 48: Wickeleinrichtung
- 50: erfindungsgemäße Anordnung
- A: Abstand zwischen erstem und zweitem Längsanschlag
- B: Breite des Überlappungsbereichs

## Patentansprüche

1. Auskleidungsschlauch zur Sanierung von Kanälen und Abwasserleitungen, mit einem Innenfolienschlauch (2), der durch Verbinden der Randabschnitte (4a, 4b) wenigstens einer Folienbahn (6) erzeugt wird, die auf ihrer Außenseite eine Vliesschicht (8) aufweist, sowie mit einer auf der Vliesschicht (8) angeordneten Verstärkungslage (10), die ein mit einem lichhärtbaren Reaktionsharz getränktes, insbesondere schraubenförmig gewickeltes Faserband (10) umfasst,
**dadurch gekennzeichnet,**
**dass** sich die Vliesschicht (8) in den Randabschnitten (4a, 4b) bis an die jeweilige Längskante (6a, 6b) der Folienbahn (6) heran erstreckt, dass die Randbereiche (4a, 4b) der Folienbahn (6) in einem Überlappungsbereich (12) mit einer Breite (B) von 0,1 bis 10 mm, insbesondere 0,5 bis 2 mm übereinander geführt sind, und dass auf der der Vliesschicht (8) gegenüberliegenden Seite (14) der Folienbahn (6) ein mit der Folienbahn thermisch verschweißtes Folienband (16) angeordnet ist, welches den Überlappungsbereich (12) überdeckt.

2. Auskleidungsschlauch nach Anspruch 1,
**dadurch gekennzeichnet,**
**dass** die Folienbahn (6) eine Verbundfolie mit einer ersten Lage (18a) aus Polyethylen oder Polypropylen, einer darauf angeordneten zweiten Lage (18b) aus Polyamid und einer darauf angeordneten dritten Lage (18c) aus Polyethylen oder Polypropylen umfasst, auf welch letztere die Vliesschicht (8) aufgebracht ist.

3. Auskleidungsschlauch nach Anspruch 2,
**dadurch gekennzeichnet,**
**dass** die Verbundfolie eine Dicke im Bereich von 200 Mikrometern und die Vliesschicht (8) eine Dicke im Bereich von 100 Mikrometern besitzt.

4. Auskleidungsschlauch nach einem der vorhergehenden Ansprüche,
**dadurch gekennzeichnet,**
**dass** die Vliesschicht (8) ein Polyestervlies und/oder ein Glasfaservlies umfasst.

5. Auskleidungsschlauch nach einem der Ansprüche 1 bis 4,
**dadurch gekennzeichnet,**
**dass** das Folienband (16) eine der Dicke der Folienbahn (6) entsprechende Dicke und/oder einen dem Aufbau der Folienbahn (6) entsprechenden Aufbau besitzt.

6. Auskleidungsschlauch nach einem der vorhergehenden Ansprüche,
**dadurch gekennzeichnet,**
**dass** das Folienband (16) vor dem Übereinanderführen der Randbereiche (4a, 4b) an der der Vliesschicht (8) gegenüberliegenden Seite (14) der Folienbahn (6) über eine erste thermische Schweißnaht (20a) befestigt ist, die sich bis an die zugehörige erste Längskante (6a) der Folienbahn (6) heran erstreckt, und dass ein die erste Schweißnaht (20a) überragender Abschnitt (22) des Folienbandes (16) mit der Folienbahn (6) nach dem Übereinanderführen der Randbereiche (4a, 4b) durch eine zweite thermische Schweißnaht (20b) verbunden wird.

7. Verfahren zur Herstellung eines Auskleidungsschlauchs nach einem der Ansprüche 1 bis 6, bei dem wenigstens ein mit einem härtbaren Reaktionsharz getränktes Faserband (10) schraubenförmig auf einen über einen Wickeldorn (32) geführten Innenfolienschlauch (2) gewickelt wird, der durch Verbinden eines ersten und zweiten Randabschnitts (4a, 4b) wenigstens einer Folienbahn (6) erzeugt wird, die auf ihrer die Außenseite des Folienschlauchs (2) bildenden Seite ganzflächig mit einer Vliesschicht (8) versehen ist,
**gekennzeichnet durch** die folgenden Verfahrensschritte:
Bewegen der Längskante (6a) des ersten Randabschnitts (4a) der Folienbahn (6) entlang einem ersten Längsanschlag (38a),
Bewegen des zweiten Randabschnitts (4b) der Folienbahn (6) im Wesentlichen parallel zum ersten Längsanschlag (38a) derart, dass die Vliesschicht (8) des ersten Randabschnitts (4a) auf der der Vliesschicht (8) gegenüberliegenden Seite des zweiten Randabschnitts (4b) zu liegen kommt und diesen in einem Überlappungsbereich (12) mit einer Breite (B) im Bereich von 0,1 bis 10 mm, insbesondere 0,5 bis 2 mm überdeckt, und Aufschweißen eines thermisch verschweißbaren Folienbandes (16) auf die der Vliesschicht (8) gegenüberliegende Seite (14) der Folienbahn 6), welches den Überlappungsbereich (12) überdeckt und abdichtet.

8. Verfahren nach Anspruch 7,
**dadurch gekennzeichnet,**
**dass** der erste Randabschnitt (4a) entlang einem insbesondere wellenförmigen flächigen Führungsabschnitt (40a) bewegt wird, dem der erste Längsanschlag (38a) zugeordnet ist, und/oder dass der zweite Randabschnitt (4b) entlang einem insbesondere wellenförmigen zweiten flächigen Führungsabschnitt (40b) bewegt wird, welchem ein zweiter Längsanschlag (38b) zugeordnet ist.

9. Verfahren nach Anspruch 8,
**dadurch gekennzeichnet,**
**dass** der erste und/oder zweite flächige Führungsabschnitt (40a, 40b) wenigstens eine angetriebne Transportwalze (42) umfasst, welche die Folienbahn (6) kontaktiert und diese in Richtung zum Wickeldorn (32) hin fördert.

10. Verfahren nach einem der Ansprüche 7 bis 9,
**dadurch gekennzeichnet,**
**dass** die Folienbahn (6) von einer insbesondere gebremsten Folienbahnrolle (24) abgezogen wird, und dass dem Wickeldorn (32) eine Formschulter (28) vorgeordnet ist, welche die Folienbahn (6) zumindest im Bereich der Randabschnitte (4a, 4b) umlenkt und in eine Schlauchform überführt.

11. Anordnung (50) zur Durchführung des Verfahrens nach einem der Ansprüche 7 bis 10, umfassend eine Abrollvorrichtung (24) für eine eine Vliesschicht (8) aufweisende Folienbahn (6), eine Verbindungsstation (36) zum Verbinden eines ersten und zweiten Randabschnitts (4a, 4b) der Folienbahn (6), einen Wickeldorn (32), über welchen die zu einem Innenfolienschlauch (2) geformte Folienbahn (6) gefördert wird, sowie eine Wickeleinrichtung (50), in welcher ein harzgetränktes Faserband (10) überlappend um den Wickeldorn (32) herumgeführt wird
**dadurch gekennzeichnet,**
**dass** die Verbindungsstation (36) wenigstens einen ersten Längsanschlag (38a) umfasst, entlang von welchem die Längskante (6a) des ersten Randabschnitts (4a) der Folienbahn (6) bewegt wird, dass die Verbindungsstation (36) einen zweiten Längsanschlag (38b) umfasst, entlang von welchem der zweite Randabschnitt (4b) geführt wird und der in einem solchen Abstand (A) entfernt vom ersten Längsanschlag (38a) und parallel zu diesem angeordnet ist, dass sich die Ränder (6a, 6b) der Folienbahn (6) auf der die Vliesschicht (8) aufweisenden Seite in einem Überlappungsbereich (12) mit einer Breite (B) im Bereich von 0,1 bis 10 mm, insbesondere 0,5 bis 2 mm überdecken, und dass die Verbindungsstation (36) weiterhin eine dem Überlappungsbereich (12) zugeordnete thermische Schweißeinrichtung (44) umfasst, die ein entlang des Überlappungsbereichs (12) bewegtes thermisch verschweißbares Folienband (16) auf der der Vliesschicht (8) gegenüberliegenden Seite (14) der Folienbahn (6) unter Zufuhr von Wärmeenergie mit der Folienbahn (6) verbindet.

12. Anordnung nach Anspruch 11,
**dadurch gekennzeichnet,**
**dass** diese einen ersten wellenförmigen flächigen Führungsabschnitt (40a) und einen zweiten wellenförmigen flächigen Führungsabschnitt (40b) umfasst, an denen der erste und zweite Längsanschlag (38a, 38b) geformt sind.

13. Anordnung nach Anspruch 12,
**dadurch gekennzeichnet,**
**dass** dem ersten und/oder dem zweiten flächigen Führungsabschnitt (40a, 40b) wenigstens eine angetriebne Transportwalze (42) zugeordnet ist, welche die Folienbahn (6) kontaktiert und diese in Richtung zum Wickeldorn (32) hin fördert.

## Claims

1. Pipe liner for the renovation of sewers and effluent lines, with an inner film sleeve (2), which is produced by joining the edge portions (4a, 4b) of at least one film web (6), which has on its outer side a nonwoven layer (8), and with a reinforcing layer (10) which is arranged on the nonwoven layer (8) and comprises a roving (10) impregnated with a light-curable reactive resin and is wound in particular in a helical form,
**characterised in that**
the nonwoven layer (8) extends in the edge portions (4a, 4b) up to the respective longitudinal edge (6a, 6b) of the film web (6), that the edge regions (4a, 4b) of the film web (6) are placed one over the other in an overlapping region (12) with a width (B) of 0.1 to 10 mm, in particular 0.5 to 2 mm, and that arranged on the side (14) of the film web (6) opposite the nonwoven layer (8) is a film strip (16) that is heat-welded to the film web and covers the overlapping region (12).

2. Pipe liner according to claim 1,
**characterised in that**
the film web (6) comprises a laminated film with a first layer (18a) of polyethylene or polypropylene, a second layer (18b) of polyamide arranged on it and a third layer (18c) of polyethylene or polypropylene arranged on it, to which finally the nonwoven layer (8) is applied.

3. Pipe liner according to claim 2,
**characterised in that**
the thickness of the laminated film is in the region of 200 microns and that of the nonwoven layer (8) is in the region of 100 microns.

4. Pipe liner according to one of the preceding claims,
**characterised in that**
the nonwoven layer (8) comprises a polyester fleece and/or a fibreglass fleece.

5. Pipe liner according to one of claims 1 to 4,
**characterised in that**
the thickness of the film strip (16) corresponds to the thickness of the film web (6) and/or its structure corresponds to the structure of the film web (6).

6. Pipe liner according to one of the preceding claims;
**characterised in that,**
before the edge regions (4a, 4b) are placed one over the other on the side (14) of the film web (6) opposite the nonwoven layer (8), the film strip (16) is fastened by a heat-welded seam (20a) which extends up to the associated first longitudinal edge (6a) of the film web (6), and that a portion (22) of the film strip (16) projecting over the first heat-welded seam (20a) is joined to the film web (6) by a second heat-welded seam (20b) after the edge regions (4a, 4b) are placed one over the other.

7. Method for producing a pipe liner in accordance with one of the claims 1 to 6, in which at least one roving (10) impregnated with a curable reactive resin is wound in a helical form on an inner film sleeve (2) fed over a winding mandrel (32) wherein said sleeve is produced by joining a first and second edge portion (4a, 4b) of at least one film web (6), which is provided with a nonwoven layer (8) over its entire surface on its side forming the outer side of the film sleeve (2).
**characterised by** the following method steps:
Movement of the longitudinal edge (6a) of the first edge portion (4a) of the film strip web (6) along a first longitudinal stop (38a),
Movement of the second edge portion (4b) of the film web (6) essentially parallel to the first longitudinal stop (38a) such that the nonwoven layer (8) of the first edge portion (4a) then lies on the side of the second edge portion (4b) opposite the nonwoven layer (8) and is placed over the latter in an overlapping region (12) with a width (B) of 0.1 to 10 mm, in particular 0.5 to 2 mm, followed by heat-welding a film strip (16) on the side (14) of the film web (6) opposite the nonwoven layer (8), wherein said film web covers and seals the overlapping region (12).

8. Method according claim 7,
**characterised in that**
the first edge portion (4a) is moved along a particularly wave-shaped planar guide portion (40a) which is associated with the first longitudinal stop (38a), and/or that the second edge portion (4b) is moved along a second particularly wave-shaped planar guide portion (40b) which is associated with a second longitudinal stop (38b).

9. Method according to claim 8,
**characterised in that**
the firs and/or second planar guide portion (40a, 40b) comprise(s) at least one driven transportation roller (42) which contacts the film web (6) and conveys it towards the winding mandrel (32).

10. Method according to one of the claims 7 to 9,
**characterised in that**
the film web (6) is drawn off a particularly braked film web roll (24) and that a forming shoulder (28) is arranged before the winding mandrel (32) which deflects the film web (6) at least in the region of the edge portions (4a, 4b) and converts it into a tubular form.

11. Arrangement (50) to carry out the method according to one of the claims 7 to 10, comprising an unrolling device (24) for a film web (6) having a nonwoven layer (8), a joining station (36) for joining a first and second edge portion (4a, 4b) of the film web (6), a winding mandrel (32) over which the film web (6) is fed to be formed into an inner film sleeve (2), and a winding device (50) in which a roving (10) impregnated with resin is fed around the winding mandrel (32) so that it is overlapping
**characterised in that**
the joining station (36) comprises at least one first longitudinal stop (38a) along which the longitudinal edge (6a) of the first edge portion (4a) of the film web (6) is moved, that the joining station (36) comprises a second longitudinal stop (38b) along which the second edge portion (4a) is guided and which is arranged parallel to the former and at a distance (A) from the first longitudinal stop (38a) such that the edges (6a, 6b) of the film web (6) are placed over the side having the nonwoven layer (8) in an overlapping region (12) with a width (B) of 0.1 to 10 mm, in particular 0.5 to 2 mm, and that the joining station (36) also comprises a heat-welding device (44) associated with the overlapping region (12), wherein said heat-welding device joins a heat-weldable film strip (16) on the side (14) of the film web (6) opposite the nonwoven layer (8), as thermal energy is supplied, to the film web (6), as said film strip moves along the overlapping region 12).

12. Arrangement according to claim 11,
**characterised in that**
it comprises a first wave-shaped planar guide portion (40a) and a second wave-shaped planar guide portion (40b) on which the first and second longitudinal stops (38a, 38b) are formed.

13. Arrangement according to claim 12,
**characterised in that**
at least one driven transportation roller (42) is associated with the first and/or second planar guide portion (40a, 40b), wherein said roller contacts the film web (6) and conveys it towards the winding mandrel (32).

## Revendications

1. Gaine de chemisage pour la réhabilitation de canalisations et de conduites d'égout, comprenant un tuyau à film intérieur (2) qui est produit par la liaison des sections de bord (4a, 4b) au moins d'un film (6) qui présente une couche en voile (8) sur son côté extérieur, et comprenant une couche de renforcement (10) disposée sur la couche en voile (8), laquelle couche de renforcement comprend un ruban de fibre (10) imbibé avec une résine de réaction photodurcissable, notamment enroulé en forme hélicoïdale,
**caractérisée en ce**
**que** la couche en voile (8), dans les sections de bord (4a, 4b), s'étend jusqu'au bord longitudinal respectif (6a, 6b) du film (6), en ce que les zones de bord (4a, 4b) du film (6) sont superposées l'une sur l'autre dans une zone de chevauchement (12) avec une largeur (B) de 0,1 à 10 mm, notamment de 0,5 à 2 mm, et en ce qu'une bande de film (16) thermiquement soudée avec le film est disposée sur le côté (14) du film (6), opposé à la couche en voile (8), laquelle bande de film recouvre la zone de chevauchement (12).

2. Gaine de chemisage selon la revendication 1,
**caractérisée en ce**
**que** le film (6) comprend un film composite muni d'une première couche (18a) en polyéthylène ou polypropylène, d'une deuxième couche (18b) en polyamide disposée dessus, et d'une troisième couche (18c) disposée dessus, en polyéthylène ou polypropylène, la couche en voile (8) étant appliquée sur cette dernière.

3. Gaine de chemisage selon la revendication 2,
**caractérisée en ce**
**que** le film composite possède une épaisseur située dans la plage de 200 micromètres et en ce que la couche en voile (8) possède une épaisseur située dans la plage de 100 micromètres.

4. Gaine de chemisage selon l'une quelconque des revendications précédentes,
**caractérisée en ce**
**que** la couche en voile (8) comprend un voile en polyester et/ou un voile en fibres de verre.

5. Gaine de chemisage selon l'une quelconque des revendications 1 à 4,
**caractérisée en ce**
**que** la bande de film (16) possède une épaisseur correspondant à l'épaisseur du film (6) et/ou une structure correspondant à la structure du film (6).

6. Gaine de chemisage selon l'une quelconque des revendications précédentes,
**caractérisée en ce**
**que** la bande de film (16), avant que les zones de bord (4a, 4b) ne soient superposées l'une sur l'autre, est fixée, sur le côté (14) du film (6), opposé à la couche en voile (8), par l'intermédiaire d'une première soudure thermique (20a) qui s'étend jusqu'au premier bord longitudinal correspondant (6a) du film (6), et en ce qu'une section (22) de la bande de film (16), dépassant la première soudure (20a,) est reliée au film (6) au moyen d'une deuxième soudure thermique (20b) après que les zones de bord (4a, 4b) aient été superposées l'une sur l'autre.

7. Procédé de fabrication d'une gaine de chemisage selon l'une quelconque des revendications 1 à 6, dans lequel au moins un ruban de fibre (10) imbibé avec une résine de réaction durcissable est enroulé en forme hélicoïdale sur un tuyau à film intérieur (2) guidé sur un mandrin de bobinage (32), lequel tuyau est produit par la liaison d'une première et d'une seconde sections de bord (4a, 4b) au moins d'un film (6), qui, sur son côté formant le côté extérieur du tuyau en film (2), est munie d'une couche en voile (8) sur toute la surface,
**caractérisé par** les étapes de procédé suivantes :
déplacement du bord longitudinal (6a) de la première section de bord (4a) du film (6) le long d'une première butée longitudinale (38a),
déplacement de la deuxième section de bord (4b) du film (6) essentiellement parallèlement à la première butée longitudinale (38a) de manière à ce que la couche en voile (8) de la première section de bord (4a) vienne reposer sur le côté de la deuxième section de bord (4b), opposé à la couche en voile (8), et recouvre celle-ci dans une zone de chevauchement (12) avec une largeur (B) située dans la plage de 0,1 à 10 mm, notamment de 0,5 à 2 mm, et soudure d'une bande de film (16) thermiquement soudable sur le côté (14) du film (6), opposé à la couche en voile (8), laquelle bande de film recouvre et étanchéifie la zone de chevauchement (12).

8. Procédé selon la revendication 7,
**caractérisé en ce**
**que** la première section de bord (4a) est déplacée le long d'une section de guidage (40a) notamment ondulée sur toute la surface, à laquelle est attribuée la première butée longitudinale (38a), et/ou en ce que la deuxième section de bord (4b) est déplacée le long d'une deuxième section de guidage (40b) notamment ondulée sur toute la surface, à laquelle est attribuée une deuxième butée longitudinale (38b).

9. Procédé selon la revendication 8,
**caractérisé en ce**
**que** la première et/ou la deuxième sections de guidage (40a, 40b) de grande surface comprennent au moins un rouleau de transport entraîné (42), lequel est en contact avec le film (6) et transporte celui-ci en direction du mandrin de bobinage (32).

10. Procédé selon l'une quelconque des revendications 7 à 9,
**caractérisé en ce**
**que** le film (6) est enlevé par un rouleau de film (24) notamment freiné, et en ce qu'un épaulement de formage (28) est placé en amont du mandrin de bobinage (32), lequel épaulement dévie le film (6) au moins dans la zone des sections de bord (4a, 4b) et le transforme en forme tubulaire.

11. Agencement (50) pour la réalisation du procédé selon l'une quelconque des revendications 7 à 10, comprenant un dispositif de déroulement (24) pour un film (6) présentant une couche en voile (8), une station de liaison (36) pour relier une première et une deuxième sections de bord (4a, 4b) du film (6), un mandrin de bobinage (32), par l'intermédiaire duquel le film formé (6) en un tuyau à film intérieur (2) est transporté, ainsi qu'un dispositif d'enroulement (50), dans lequel un ruban de fibre (10) imbibé de résine est guidé autour du mandrin de bobinage (32) par chevauchement,
**caractérisé en ce**
**que** la station de liaison (36) comprend au moins une première butée longitudinale (38a), le long de laquelle butée le bord longitudinal (6a) de la première section de bord (4a) du film (6) est déplacé, en ce que la station de liaison (36) comprend une deuxième butée longitudinale (38b), le long de laquelle la deuxième section de bord (4b) est guidée et laquelle est disposée avec un tel écart (A) de la première butée longitudinale (38a) et parallèlement à celle-ci que les bords (6a, 6b) du film (6),sur le côté présentant la couche en voile (8), se recouvrent dans une zone de chevauchement (12) avec une largeur (B) située dans la plage de 0,1 à 10 mm, notamment de 0,5 à 2 mm, et en ce que la station de liaison (36) comprend en outre un dispositif de soudure thermique (44) attribué à la zone de chevauchement (12), lequel dispositif relie une bande de film (6) thermiquement soudable, déplacée le long de la zone de chevauchement (12), sur le côté (14) du film (6), opposé à la couche en voile (8), au film (6) en apportant de l'énergie thermique.

12. Agencement selon la revendication 11,
**caractérisé en ce**
**que** celui-ci comprend une première section de guidage (40a) ondulée sur une grande surface et une deuxième section de guidage (40b) ondulée sur une grande surface, sur lesquelles sont formées la première et la deuxième butées longitudinales (38a, 38b).

13. Agencement selon la revendication 12,
**caractérisé en ce**
**qu'**au moins un rouleau de transport (42) entraîné est attribué à la première et/ou à la deuxième sections de guidage (40a, 40b) sur une grande surface, lequel rouleau de transport est en contact avec le film (6) et transporte celui-ci en direction du mandrin de bobinage (32).
